# EUROPÄISCHE PATENTSCHRIFT

(11) **EP 1 197 148 B1**
(45) Veröffentlichungstag und Bekanntmachung des Hinweises auf die Patenterteilung: **06.12.2006**
(21) Anmeldenummer: 01122718.8
(22) Anmeldetag: 21.09.2001
(51) Int. Cl.: A21B 1/26, A21B 1/40

(54) **Stikkenofen**
Rack oven
Four à chariots

(30) Priorität: 28.09.2000 DE 10048116
(43) Veröffentlichungstag der Anmeldung: 17.04.2002
(73) Patentinhaber: Werner & Pfleiderer Lebensmitteltechnik GmbH, 91550 Dinkelsbühl (DE)
(72) Erfinder: Hübener, Edgar, 91522 Ansbach (DE); Heller, Anton, 84424 Isen (DE)
(74) Vertreter: Rau, Manfred

(56) Entgegenhaltungen:
- EP-A- 0 909 533
- DE-A1- 2 928 716
- DE-A1- 4 413 944
- DE-A1- 19 920 583
- DE-U1- 29 609 771
- US-A- 4 162 141
- PATENT ABSTRACTS OF JAPAN Bd. 1999, Nr. 03, 31. März 1999 (1999-03-31) & JP 10 318572 A (MATSUSHITA SEIKO ENG KK), 4. Dezember 1998 (1998-12-04)

## Beschreibung

Die Erfindung betrifft einen Stikkenofen nach dem Oberbegriff des Anspruches 1.

Bei derartigen Stikkenöfen steht der Backwagen entweder still im Backraum oder wird während des Backvorganges ständig gedreht. In letzterem Fall ist im Boden des Backraums ein Drehteller vorgesehen, auf dem der Backwagen steht. Einander gegenüberliegende Backraum-Begrenzungs-Wände sind mit Umluft-Durchtritts-Öffnungen versehen, so daß die Umluft den Backraum und damit auch den Etagenwagen mit dem auf ihm befindlichen Backgut im wesentlichen horizontal quer durchströmt. Bei den Stikkenöfen handelt es sich also um Konvektionsöfen. Die abgekühlte Umluft verläßt den Backraum und wird im Wärmetauscher wieder erhitzt und durchströmt erneut den Backraum. Der Umluft-Umlauf ist also geschlossen. Die Umluft-Geschwindigkeit ist konstant.

Sehr oft werden in derartigen Stikkenöfen gefrostete oder kalte Teiglinge gebacken. Nach dem Beschicken des Backraums mit einem kalten Backwagen, der teilweise oder vollständig mit kalten Teiglingen belegt ist, sinkt die Temperatur im Backraum innerhalb kurzer Zeit stark ab, und zwar beispielsweise um 50° bis 120° C. Dadurch bildet sich vor allem bei sehr kalten Teiglingen, beispielsweise also gefrosteten Teiglingen, im unteren Bereich des Backraums eine ausgeprägte Kältezone, ein sogenanntes Kältenest. Die Wiederanhebung der Temperatur bis hinauf zur Soll-Backtemperatur dauert bei den bekannten Stikkenöfen zu lange. Bei einer durchschnittlichen Gesamt-Backzeit des Backguts von ca. 15 Minuten muß eine Temperatur-Erholungsphase zu Beginn des Backvorganges sehr kurz gehalten werden, um ein optimales Backergebnis zu erreichen.

Ein Stikkenofen mit den Merkmalen des Oberbegriffs des Anspruches 1 ist bekannt aus der DE 29 28 716 A1. Weitere Stikkenöfen sind bekannt aus der EP 0 909 533 A2 und der DE 199 20 583 A1. Aus der DE 296 09 771 U 1 ist ein Etagenbackofen bekannt. Die DE 44 13 944 A1 zeigt ein Verfahren und eine Vorrichtung zum Verteilen von Luft in Laderäumen, wobei hierzu Kühlluft über ein Gebläse zugeführt wird, dessen Gebläseleistung über einen Signalfrequenzwandler gesteuert wird.

Der Erfindung liegt die Aufgabe zugrunde, einen Stikkenofen der gattungsgemäßen Art so auszugestalten, daß nach dem Beschicken des Stikkenofens ein starker Temperaturabfall am Backbeginn möglichst weitgehend unterbunden werden kann.

Diese Aufgabe wird erfindungsgemäß durch das Merkmal im Kennzeichnungsteil des Anspruches 1 gelöst. Durch die erfindungsgemäßen Maßnahmen wird erreicht, daß beispielsweise zu Beginn des Backvorgangs die Umwälzgeschwindigkeit der Umluft erhöht wird, so daß ein höherer Wärmeübergang erreicht wird. Es wird also eine größere Wärmemenge an das Backgut und den Backwagen gebracht. Dadurch können auch Kältenester im unteren Bereich des Ofens vermieden werden.

Weitere Merkmale, Vorteile und Einzelheiten der Erfindung ergeben sich aus der nachfolgenden Beschreibung zweier Ausführungsbeispiele der Erfindung anhand der Zeichnung. Es zeigt:
- Fig. 1: einen Stikkenofen mit stehendem Backwagen im vertikalen Längsschnitt in schematischer Darstellung,
- Fig. 2: den Stikkenofen nach Fig. 1 mit geänderter Umluft-Durchströmung,
- Fig. 3: einen Stikkenofen mit rotierendem Backwagen,
- Fig. 4: ein Blockschaltbild für eine Steuerung eines erfindungsgemäßen Stikkenofens,
- Fig. 5: ein Diagramm der Strömungsgeschwindigkeit über der Zeit für einen Stikkenoffen mit stehendem Backwagen und
- Fig. 6: ein Diagramm der Strömungsgeschwindigkeit über der Zeit für einen Stikkenoffen mit rotierendem Backwagen.

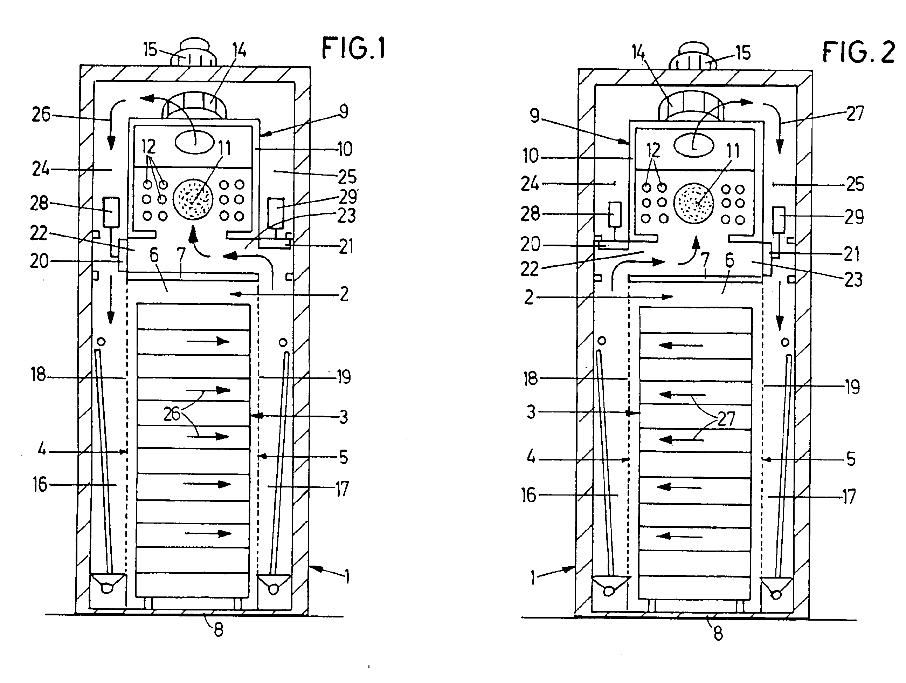

Der in Fig. 1 und 2 dargestellte Stikkenofen weist ein etwa quaderförmiges Ofen-Gehäuse 1 mit einem Backraum 2 auf, in den ein Etagen-Backwagen 3 eingefahren werden kann. Der Backraum 2 weist zwei einander gegenüberliegende, vertikal verlaufende Backraum-Begrenzungs-Wände 4, 5 auf, die parallel zueinander angeordnet sind, und die zwischen sich den Backwagen 3 aufnehmen. Der Backwagen 3 steht während des gesamten Backvorgangs unbeweglich im Backraum 2. Der Backraum 2 wird weiterhin zur Rückseite durch eine Rückwand 6, nach oben durch eine Decke 7, nach unten durch einen Boden 8 und zur Vorderseite durch eine nicht dargestellte Tür begrenzt.

Oberhalb des Backraums 2 ist im Gehäuse 1 eine Wärmetauscher-Einheit 9 angeordnet, die von einem kastenförmigen Wärmetauscher-Gehäuse 10 umschlossen ist. In dem Gehäuse 10 ist ein nur angedeuteter Brenner 11 angeordnet, dessen Rauchgase durch Wärmetauscher-Rohre 12 geleitet werden und durch einen nicht dargestellten Rauchgas-Abzug das Gehäuse 1 verlassen.

Im oberen Teil des Gehäuses 1 ist ein Gebläse 14 angeordnet, das von einem Elektro-Motor 15 antreibbar ist. Mittels des Gebläses 14 ist zum Bakken dienende heiße Luft im Umluft-Verfahren durch das Gehäuse 1 umwälzbar.

Beiderseits der Wände 4, 5 sind einander gegenüberliegend ein erster Umluft-Kanal 16 und ein zweiter Umluft-Kanal 17 ausgebildet, deren Querschnitt von oben nach unten sich verjüngt. Zugeordnet zu diesen Kanälen 16, 17 sind in den Wänden 4, 5 erste Umluft-Durchtritts-Öffnungen 18 und zweite Umluft-Durchtritts-Öffnungen 19 ausgebildet, durch die hindurch die Kanäle 16, 17 mit dem Backraum 2 verbunden werden. Beide Kanäle 16, 17 sind an ihrem oberen Ende jeweils wahlweise durch eine erste Umluft-Klappe 20 bzw. eine zweite Umluft-Klappe 21 wahlweise mit einer ersten Umluft-Rückführ-Öffnung 22 bzw. einer zweiten Umluft-Rückführ-Öffnung 23 der Wärmetauscher-Einheit 9 oder einem ersten Umluft-Vorlauf-Kanal 24 bzw. einem zweiten Umluft-Vorlauf-Kanal 25 verbindbar.

Das Gebläse 14 saugt in der Wärmetauscher-Einheit 9 erhitzte Umluft aus dem Wärmetauscher-Gehäuse 10 an und drückt sie in die Umluft-Vorlauf-Kanäle 24, 25. Bei der Darstellung gemäß Fig. 1 verschließt die erste Umluft-Klappe 20 die erste Umluft-Rückführ-Öffnung 22 und verbindet den ersten Umluft-Kanal 16 direkt mit dem ersten Umluft-Vorlauf-Kanal 24. Umgekehrt verschließt die zweite Umluft-Klappe 21 den zweiten Umluft-Vorlauf-Kanal 25 und verbindet den zweiten Umluft-Kanal 17 über die zweite Umluft-Rückführ-Öffnung 23 mit der Wärmetauscher-Einheit 9. Die vom Gebläse 14 durch die Wärmetauscher-Rohre 12 angesaugte erhitzte Umluft wird also entsprechend den in Fig. 1 dargestellten Strömungs-Richtungspfeilen 26 durch den ersten Umluft-Vorlauf-Kanal 24 direkt in den ersten Umluft-Kanal 16 gedrückt und strömt von dort durch die ersten Umluft-Durchtritts-Öffnungen 18 in den Backraum 2 ein. Die Umluft durchströmt den Backraum 2 über dessen volle Höhe entsprechend den eingezeichneten Strömungsrichtungs-Pfeilen 26 und tritt durch die zweiten Umluft-Durchtritts-Öffnungen 19 in den zweiten Umluft-Kanal 17 aus. Im Backraum 2 wird die Temperatur der Umluft bei der Quer-Durchströmung durch entsprechende Wärmeaufnahme des Backgutes abgekühlt. Die abgekühlte Umluft tritt aus dem zweiten Umluft-Kanal 17 durch die zweite Umluft-Rückführ-Öffnung 23 wieder in das Gehäuse 10 der Wärmetauscher-Einheit 9 und wird dort wieder aufgeheizt.

Wenn gemäß der Darstellung in Fig. 2 die erste Umluft-Klappe 20 den ersten Umluft-Vorlauf-Kanal 24 verschließt und die erste Umluft-Rückführ-Öffnung 22 freigibt und umgekehrt die zweite Umluft-Klappe 21 die zweite Umluft-Rückführ-Öffnung 23 verschließt und den zweiten Umluft-Vorlauf-Kanal 25 direkt mit dem zweiten Umluft-Kanal 17 verbindet, dann strömt die Umluft entsprechend den Strömungs-Richtungs-pfeilen 27 in umgekehrter Richtung. Die Umluft durchströmt den Backraum 2 ebenfalls horizontal, aber entgegen den Strömungs-Richtungs-pfeilen 26, so daß der Temperaturabfall in umgekehrter Richtung zum Temperaturabfall bei der Strömungsrichtung 26 stattfindet.

Das Verstellen der Umluft-Klappen 20, 21 erfolgt also immer gleichzeitig, aber gegensinnig und in vorgegebenen programmierbaren Zeitabständen von beispielsweise 90 sec. Die Verstellung der Umluft-Klappen 20, 21 erfolgt mittels nur angedeuteter Stellmotoren 28, 29.

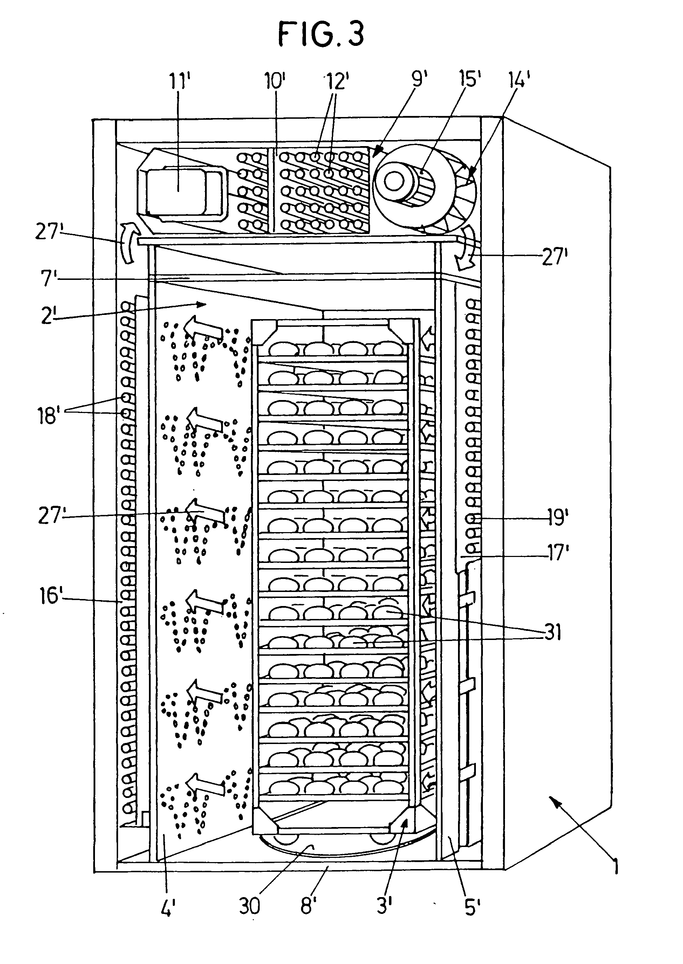

Bei dem Ausführungsbeispiel nach Fig. 3 werden identische Teile mit identischen Bezugsziffern wie in den Fig. 1 und 2 bezeichnet. Soweit es sich um funktionell identische, konstruktiv geringfügig andere Teile handelt, werden dieselben Bezugsziffern wie beim Ausführungsbeispiel nach den Fig. 1 und 2, jedoch mit einem hochgesetzten Strich verwendet. In keinem Fall bedarf es jeweils einer gesonderten erneuten Beschreibung.

Bei dem Ofen nach Fig. 3 handelt es sich um einen Stikkenofen mit rotierendem Backwagen 3'. Im Boden 8' des Backraums 2' ist ein Drehteller 30 angebracht, der während des Backvorgangs mit konstanter Drehzahl angetrieben wird, so daß der auf ihm stehende Backwagen 3' sich während des Backvorgangs ständig dreht. Oberhalb der Decke 7' des Backraums 2' ist eine Wärmetauscher-Einheit 9' mit einem Wärmetauscher-Gehäuse 10', einem Brenner 11' und Wärmetauscher-Rohren 12' angeordnet. Ein Gebläse 14' mit Motor 15' saugt ständig erneut erhitzte Umluft aus der Einheit 9' und drückt dieses in den zweiten Umluft-Kanal 17'. Von dort strömt sie durch die zweiten Umluft-Durchtritts-Öffnungen 19' in den Backraum 2' und durchströmt diesen und insbesondere den Backwagen 3' mit dem darauf befindlichen Backgut 31 entsprechend den Strömungs-Richtungspfeilen 27'. Während dieser Durchströmung wird sie durch Wärmeabgabe abgekühlt. Sie tritt durch die ersten Umluft-Durchtritts-Öffnungen 18' aus dem Backraum 2' aus und strömt durch den ersten Umluft-Kanal 16' wieder in das Wärmetauscher-Gehäuse 10' ein, durch das sie vom Gebläse 14' hindurchgesaugt wird. Da der Backwagen 3' mit dem Backgut 31 ständig kontinuierlich gedreht wird, werden alle einzelnen Backgüter 31 insoweit gleichmäßig mit heißerer oder bereits abgekühlter Umluft beaufschlagt, so daß der gleiche Effekt eintritt wie bei dem Ausführungsbeispiel nach den Fig. 1 und 2.

Bei beiden Ausführungsbeispielen wird der Elektro-Motor 15 bzw. 15' des Gebläses 14, 14' mittels eines handelsüblichen Frequenz-Umrichters 32 angesteuert. Die vom Frequenz-Umrichter 32 auf den Motor 15 bzw. 15' abgegebene Frequenz kann über ein Backprogramm gesteuert werden, so daß die Drehzahl und damit die Förderleistung des Gebläses 14 bzw. 14' entsprechend den Backbedürfnissen gesteuert wird. Hierdurch kann der unterschiedliche Wärmebedarf des Backgutes 31 über den Verlauf des Backprozesses gesteuert werden. Eine höhere Umwälzgeschwindigkeit der Umluft bei entsprechend höherer Drehzahl des Gebläses 14 bzw. 14' bedeutet einen höheren Wärmeübergang und damit eine stärkere Wärmezufuhr auf das Backgut 31 und umgekehrt.

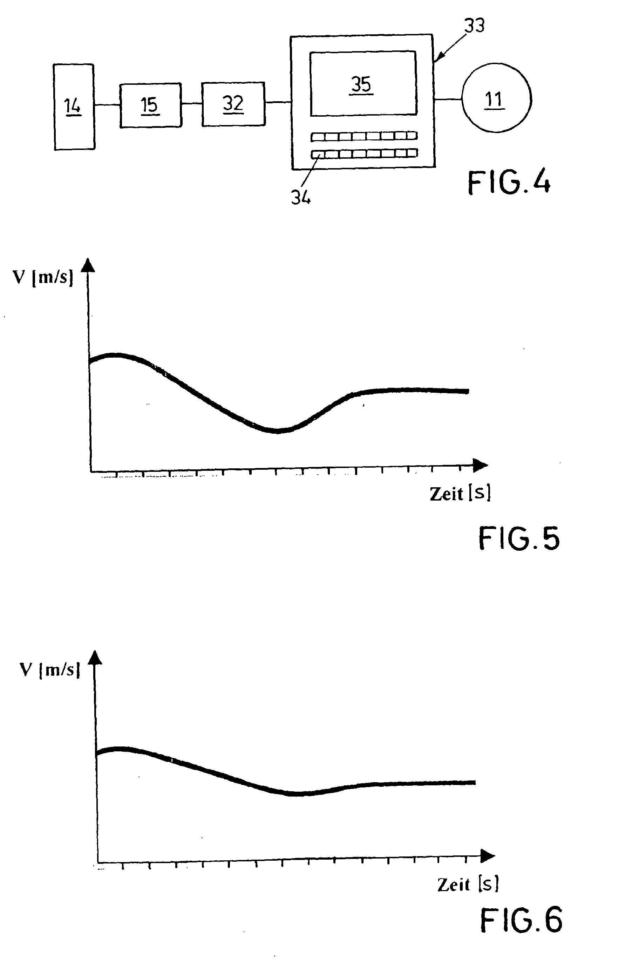

In Fig. 4 zeigt als Blockschaltbild ein Gebläse 14 mit Antriebsmotor 15 und dem Frequenz-Umrichter 32. Der Frequenz-Umrichter 32 wird von einer Steuerung 33 angesteuert, die unter anderem Eingabe-Tastaturen 34 und einen Bildschirm 35 aufweist.

Über die Eingabe-Tastaturen 34 wird für einzelne Backschritte, von beispielsweise jeweils 90 Sekunden Dauer, die Umluftgeschwindigkeit v in m/s eingegeben. Sie kann also über der gesamten Backzeit stetig verändert werden. Da Frequenz-Umrichter Rampen fahren, ergeben sich stetige Verläufe der Umluft-Geschwindigkeit, die bei Stikkenöfen mit stehendem Backwagen 3 entsprechend dem Diagramm nach Fig. 5 anders verläuft als bei einem Stikkenofen mit rotierendem Backwagen 3' entsprechend dem Diagramm nach Fig. 6.

In gleicher Weise kann auch anstelle der Einzeleingabe der einzelnen Backschritte ein vollständiges Backprogramm eingegeben werden oder ein einmal manuell eingegebenes Backprogramm immer wieder aufgerufen werden.

Über die Steuerung 33 wird auch die jeweilige Temperatur der Umluft im jeweiligen Backschritt vorgegeben, was durch entsprechende Ansteuerung des Brenners 11 umgesetzt wird. Weiterhin kann hierüber auch die jeweilige Schwadenmenge, d. h. die Wassergabe in Liter und die Schwadenschieberstellung für jeden Backschritt vorgegeben werden. Dies ist - weil nicht zur Erfindung gehörig - nicht dargestellt.

## Patentansprüche

1. Stikkenofen mit einem einen Etagen-Backwagen (3, 3') aufnehmenden Backraum (2, 2')
- mit einander gegenüberliegenden, den Backraum (2, 2') an zwei Seiten begrenzenden Backraum-Begrenzungs-Wänden (4, 4', 5, 5'), die Umluft-Durchtritts-Öffnungen(18, 18', 19, 19') aufweisen,
- mit auf der Außenseite der Backraum-Begrenzungswände (4, 4', 5, 5') angeordneten Umluft-Kanälen (16, 16', 17, 17'),
- mit einem Brenner (11, 11'),
- mit einer dem Brenner (11, 11') zugeordneten Wärmetauscher-Einheit (9, 9') und
- mit einem von einem Elektro-Motor (15, 15') antreibbaren Gebläse (14, 14') zum Umwälzen von Umluft durch die Wärmetauscher-Einheit (9, 9') über die Umluft-Kanäle (16, 16', 17, 17') und durch den Backraum (2, 2'), wobei das Gebläse (14, 14') fördermengenregelbar ausgebildet ist,
**dadurch gekennzeichnet, daß**
- der Elektro-Motor (15, 15') mittels eines Frequenz-Umrichters (32) drehzahlregelbar ist und daß
- der Frequenz-Umrichter (32) über ein Backprogramm ansteuerbar ist.

## Claims

1. Rack oven comprising a baking space (2, 2') receiving a tiered baking trolley (3, 3')
- comprising opposing baking space delimitation walls (4, 4', 5 , 5') which delimit the baking space (2, 2') on two sides and have circulation air through-openings (18, 18', 19, 19'),
- comprising circulation air conduits (16, 16', 17, 17') positioned on the outside of the baking space delimitation walls (4, 4', 5 , 5'),
- comprising a burner (11, 11'),
- comprising a heat exchanger unit (9, 9') associated with the burner (11, 11') and
- comprising a fan (14, 14') which can be driven by an electric motor (15, 15') for circulating circulation air through the heat exchanger unit (9, 9') via the circulation air conduits (16, 16' , 17, 17') and through the baking space (2, 2'), the fan (14, 14') being constructed in such a way that its output can be regulated
**characterised in that**
- the rotational speed of the electric motor (15, 15') can be adjusted by means of a frequency converter (32), and **in that**
- the frequency converter (32) can be activated using a baking programme.

## Revendications

1. Four à chariot comportant une chambre de cuisson (2, 2') recevant un chariot (3, 3') à étages,
- avec des parois (4, 4', 5, 5') situées face à face, qui délimitent la chambre de cuisson (2, 2') sur deux côtés et qui comportent des ouvertures de circulation d'air (18, 18', 19, 19'),
- avec des canaux de circulation d'air (16, 16', 17, 17'), disposés sur la face extérieure des parois (4, 4', 5, 5') de la chambre de cuisson,
- avec un brûleur (11, 11'),
- avec une unité d'échangeur thermique (9, 9') associée au brûleur (11, 11'), et
- avec un ventilateur (14, 14') propre à être actionné par un moteur électrique (15, 15') pour faire circuler l'air à travers l'unité d'échangeur thermique (9, 9') par l'intermédiaire des canaux de circulation d'air (16, 16', 17, 17') et à travers la chambre de cuisson (2, 2'), le ventilateur (14, 14') étant réalisé de manière réglable en volume propulsé,
**caractérisé en ce que**
- la vitesse de rotation du moteur électrique (15, 15') est réglable au moyen d'un convertisseur de fréquence (32), et **en ce que**
- le convertisseur de fréquence (32) est propre à être activé par l'intermédiaire d'un programme de cuisson.
